# EUROPÄISCHE PATENTSCHRIFT

(11) **EP 2 037 228 B1**
(45) Veröffentlichungstag und Bekanntmachung des Hinweises auf die Patenterteilung: **11.11.2015**
(21) Anmeldenummer: 08005217.8
(22) Anmeldetag: 19.03.2008
(51) Int. Cl.: B61L 25/02, B66C 13/16, B66C 13/46, G01D 5/249, G01D 5/26, G05D 1/02, G01D 5/347

(54) **Verfahren und Vorrichtung zum Bestimmen eines Wartungsintervalls eines Fahrzeugs, Computerprogramm und Computerprogrammprodukt**
Method and device for determining the maintenance interval of a vehicle, computer program and computer program product
Procédé et dispositif destinés à la détermination d'un intervalle de maintenance d'un véhicule, programme informatique et produit de programme informatique

(30) Priorität: 12.09.2007 DE 102007043498; 12.09.2007 DE 202007012798 U
(43) Veröffentlichungstag der Anmeldung: 18.03.2009
(73) Patentinhaber: Pepperl & Fuchs GmbH, 68307 Mannheim (DE)
(72) Erfinder: Hofmann, Hilmar, 69502 Hemsbach (DE); Opper, Rüdiger, 67240 Bobenheim-Roxheim (DE); Kirsch, Martin, 68259 Mannheim (DE)
(74) Vertreter: Schiffer, Axel Martin

(56) Entgegenhaltungen:
- DE-A1- 19 709 445
- DE-C1- 4 038 972
- US-A1- 2002 065 698
- US-B2- 6 867 412

## Beschreibung

Die vorliegende Erfindung bezieht sich in einem ersten Aspekt auf ein Verfahren zum Bestimmen eines Wartungsintervalls eines Fahrzeugs nach dem Oberbegriff des Anspruchs 1.

In einem weiteren Gesichtspunkt betrifft die Erfindung eine Vorrichtung zum Bestimmen eines Wartungsintervalls eines Fahrzeugs nach dem Oberbegriff des Anspruchs 10.

Insbesondere bezieht sich die Erfindung auf Fahrzeuge, die EinschienenHängebahnen, Regalbediengeräte, Krananlagen oder sonstige verfahrbare Geräte sind, die entlang einer Bahn oder auf oder parallel zu einer vorgegebenen Fläche verfahrbar sind, und wobei entlang der Bahn Marker, wobei es sich insbesondere um Codeträger oder Barcodes handelt, angeordnet sind.

Ein Verfahren und eine Vorrichtung dieser Art ist beispielsweise in DE 199 10 933 A1 offenbart.

Weitere Positionierverfahren sind in EP 0 039 921 A2, DE 38 25 097 A1, EP 0 116 636 A1, DE 39 10 873 A1, DE 42 09 629 A1 und DE 43 09 863 C1 beschrieben. Diese bekannten Systeme weisen folgende Nachteile auf.

Die erreichbare Genauigkeit der Positionsbestimmung ist durch die Länge der Codemarken oder deren Elemente begrenzt, da die Codeelemente in einer oder mehreren parallelen Spuren längs des Fahrwegs aufgereiht sind und beim Verfahren nacheinander abgetastet werden müssen. Die Packungsdichte der Codeelemente auf dem Codeträger kann aber nicht über ein gewisses Maß hinaus erhöht werden, weil das räumliche Auflösungsvermögen der Abtastelemente, z.B. Lichtschranken, begrenzt ist. Die Länge der Codeträger kann daher nicht unter einen bestimmten Mindestwert verkleinert werden, so dass der Positionsauflösung Grenzen gesetzt sind.

Ferner ist zur lückenlosen Abdeckung eines langen Fahrwegs mit ausreichender Längsauflösung eine große Anzahl von Codeträgern und somit, wenn sich der Codeinhalt längs des Fahrweges nicht wiederholen soll, eine entsprechend große Wortbreite der Codes erforderlich. Eine zunehmende Wortbreite lässt aber nicht nur die Länge der einzelnen Codeträger, sondern vor allem auch den Aufwand und die Kosten für die Codeleser sehr schnell anwachsen.

Ferner geht mit längeren Codeträgern eine geringere Auflösung der Positionsbestimmung einher, so dass eine Realisierung von Fahrwegen von mehreren Kilometern, die z.B. in modernen industriellen Fertigungsstraßen erwünscht oder notwendig sein können, mit hinreichender Auflösung schwierig ist. Diese Problematik wird noch erheblich verschärft, wenn auf den Codeträgern redundante Informationen vorhanden sein sollen, um die Betriebssicherheit des Systems, z.B. dessen Resistenz gegen Verschmutzung oder Beschädigung von Teilen des Codeträgers, zu verbessern und dadurch das Risiko von Ausfällen oder, unter Umständen folgenschweren, Fehlpositionierungen zu verringern.

Außerdem erlaubt keines der bekannten Systeme zusätzlich zur Positionsbestimmung in Fahrtrichtung auch eine Positionsbestimmung quer zur Fahrtrichtung. Eine solche kann etwa zum automatischen Ausgleich von temperatur- oder lastwechselbedingten Biegeverformungen wünschenswert sein. Darüber hinaus sind die erforderlichen Abtastelemente, bevorzugt Lichtschranken, anfällig für Dejustierungen und Verschmutzungen und damit wartungsintensiv. Dies spielt insbesondere eine Rolle bei Systemen mit einer Vielzahl von nebeneinander angeordneten Abtastelementen.

Ein weiterer Nachteil der genannten Systeme besteht darin, dass eine Positionsbestimmung bei stillstehendem Fahrzeug nicht ohne weiteres möglich ist. Diejenigen Systeme, welche im Durchlichtverfahren arbeiten, sind außerdem mechanisch aufwändig und anfällig gegen Verformungen des Codeträgers. Einige der oben genannten Systeme sind ferner sehr empfindlich gegen eine Änderungen der Orientierung der Codeträger gegenüber dem Codeleser.

Aufgrund der beschränkten Lebensdauer bestimmter Verschleißteile, beispielsweise von Einschienenhängebahnen, werden solche Fahrzeuge derzeit üblicherweise zyklisch nacheinander auf einen Prüfstand gefahren und dort auf ihre Funktionstüchtigkeit überprüft und untersucht. Hierfür muss zum einen eine gesonderte Anlage bereitgestellt und vorgehalten werden und außerdem müssen die Wartungsphasen zeitlich berücksichtigt und eingeplant werden. Zwangsläufig wird es dabei vorkommen, dass einerseits ein noch voll funktionstüchtiges Fahrzeug in eine Wartungsphase geht. Ebenso ist andererseits möglich, dass ein Fahrzeug, eventuell aufgrund einer überdurchschnittlichen Beanspruchung bereits vor der Wartungsphase ausfällt.

US 6,867,412 B2 beschreibt eine Vorrichtung mit einem Lesekopf und einem Maßstab zum Bestimmen der relativen Position zwischen dem Lesekopf und dem Maßstab. Hierzu weist der Maßstab sich wiederholende Inkrementalelemente sowie Code-Elemente mit einer codierten Ortsinformation auf.

DE 40 38 972 C1 betrifft eine Vorrichtung zur Berechnung eines Kraftfahrzeug-Wartungsintervalls. Hierbei ist ein Computer vorhanden, der das Wartungsintervall anhand verschiedener ermittelter Betriebswerte des Kraftfahrzeugs berechnet und ausgibt.

In DE 197 09 445 A1 sind eine Vorrichtung und ein Verfahren zur Berechnung und Anzeige von Service-Intervallen bei Verschleiß von Komponenten eines Kraftfahrzeugs beschrieben. Hierzu sind Sensoren vorhanden, die Betriebsparameter des Kraftfahrzeugs bestimmen und damit eine Bestimmung des Verschleißes ermöglichen.

Gegenstand von US 2002/0065698 A1 ist eine Methode zur Verwaltung einer Mehrzahl von Zügen oder LKW, wobei Informationen über den Verschleiß der Züge oder LKW gesammelt und über ein Computernetzwerk weitergegeben werden.

Eine Aufgabe der Erfindung kann darin gesehen werden, ein Verfahren und eine Vorrichtung der oben beschriebenen Art zu schaffen, welche eine verbesserte Positionsauflösung ermöglichen und längere Fahrwege erlauben. Darüber hinaus sollen die einzelnen Fahrzeuge den Wartungsphasen gezielter zugeführt werden können. Außerdem soll ein geeignetes Computerprogramm angegeben werden.

Diese Aufgabe wird in einem ersten Aspekt durch das Verfahren mit den Merkmalen des Anspruchs 1 gelöst.

In einem zweiten Aspekt wird die Aufgabe durch die Vorrichtung mit den Merkmalen des Anspruchs 10 gelöst.

Schließlich wird die Aufgabe gelöst durch das Computerprogramm mit den Merkmalen des Anspruchs 14 und das Computerprogrammprodukt mit den Merkmalen des Anspruchs 15.

Bevorzugte Varianten des erfindungsgemäßen Verfahrens und vorteilhafte Ausgestaltungen der erfindungsgemäßen Vorrichtungen sind Gegenstand der unabhängigen Ansprüche.

Das Verfahren der oben genannten Art ist erfindungsgemäß dadurch weitergebildet, dass die Marker mit einer an dem Fahrzeug angeordneten Digitalkamera erfasst werden, dass mittels Bildverarbeitung aus einer Lage mindestens eines Markerbilds im Erfassungsbereich der Digitalkamera eine Relativposition des Fahrzeugs bezüglich des jeweiligen Markers oder der jeweiligen Marker bestimmt wird, dass Positionsdaten des Fahrzeugs aufgenommen und gespeichert werden, dass auf Grundlage der Positionsdaten mindestens ein Wartungsparameter bestimmt wird, dass der Wartungsparameter mit einem vorgegebenen Referenzwert verglichen wird und dass zum Anzeigen der Wartungsreife des Fahrzeugs ein Signal ausgegeben wird, wenn der Wartungsparameter in einer bestimmten Relation zu dem Referenzwert steht, insbesondere größer als der Referenzwert ist.

Die Vorrichtung der oben angegebenen Art ist erfindungsgemäß weitergebildet durch eine an dem Fahrzeug anzuordnenden Digitalkamera zum Erfassen von entlang der Bahn angeordneten Markern, eine mit der Digitalkamera verbundenen Recheneinrichtung, welche eingerichtet ist zum: Bestimmen einer Relativposition des Fahrzeugs bezüglich eines Markers mittels Bildverarbeitung aus einer Lage des Bilds des jeweiligen Markers im Erfassungsbereich der Digitalkamera, Aufnehmen und Speichern von Positionsdaten des Fahrzeugs, Bestimmen mindestens eines Wartungsparameters auf Grundlage der Positionsdaten, Vergleichen des Wartungsparameters mit einem vorgegebenen Referenzwert oder der Wartungsparameter mit jeweils vorgegebenen Referenzwerten, Ausgeben eines Signals zur Anzeige einer Wartungsreife des Fahrzeugs, wenn mindestens einer der Wartungsparameter in einer bestimmten Relation zu dem entsprechenden Referenzwert steht, insbesondere größer ist als der entsprechende Referenzwert.

Erfindungsgemäß wurde zunächst erkannt, dass mit Hilfe von Bildverarbeitungsverfahren eine Positionsbestimmung eines Fahrzeugs in sehr präziser Weise möglich ist, indem die Position oder Lage eines bestimmten Markers in einem Erfassungsbereich einer Digitalkamera bestimmt und ausgewertet wird.

Ein weiterer Kerngedanke der vorliegenden Erfindung kann darin gesehen werden, zunächst Positionsdaten des Fahrzeugs aufzunehmen und abzuspeichern und sodann auf Grundlage dieser Positionsdaten mindestens einen Wartungsparameter zu bestimmen. Zum Feststellen einer Wartungsreife des Fahrzeugs wird dieser Wartungsparameter im Anschluss mit einem vorgegebenen Referenzwert verglichen und es wird ein Signal ausgegeben, beispielsweise an eine Steuerung des Fahrzeugs, wenn der Wartungsparameter zum Beispiel größer als ein voreingestellter Referenzwert ist.

Das erfindungsgemäße Verfahren, bei welchem es sich um ein Auflichtverfahren handelt, kann insbesondere auch eine Positionsinformation für ein stillstehendes Fahrzeug liefern und, im Unterschied zu Verfahren aus dem Stand der Technik ist auch eine Positionsbestimmung quer zur Fahrt- oder Bewegungsrichtung möglich.

Als ein weiterer wesentlicher Vorteil der Erfindung kann angesehen werden, dass für jedes Fahrzeug individuell bestimmt wird, ob eine Wartung demnächst durchgeführt werden muss. Demgemäß kann rechtzeitig vor einem Ausfall gewarnt werden, so dass eine bessere Planung oder Wartungsphasen möglich ist.

Für den praktischen Betrieb in einer Industrieanlage ergeben sich hieraus erhebliche Vorteile. Zunächst können die notwendigen Wartungsarbeiten in den hierfür vorgesehenen Wartungsintervallen durchgeführt werden und die Anlage ist deshalb insgesamt weniger durch unerwünschte Ausfälle beeinträchtigt.

Darüber hinaus sinkt auch der vorrichtungsmäßige und apparative Aufwand, da ein gesonderter Prüfstand oder Wartungsplatz nicht mehr nötig ist.

Hierdurch können in erheblichem Umfang Kosten eingespart werden. Die Geräte können insgesamt sehr präzise bis zum Ende ihrer jeweiligen Lebenszeit benutzt werden, woraus sich wiederum unter Material- und logistischen Gesichtspunkten deutliche Kosteneinsparungen ergeben. Auch ist eine sehr schnelle Reaktion auf Grundlage der ermittelten Daten möglich.

Bei der Kamera kann es sich um bekannte und verfügbare Komponenten handeln, beispielsweise können Kameras mit einem CCD- oder einem CMOS-Empfängerchip eingesetzt werden.

Auch bei der Recheneinrichtung kann es sich um grundsätzlich bekannte Komponenten handeln. Besonders bevorzugt werden Mikrocontroller oder programmierbare Logikbausteine verwendet. Insbesondere können speziell für die Bildverarbeitung ausgelegte und bestimmte Bausteine eingesetzt werden.

Bei besonderen Varianten ist die Recheneinrichtung in die Digitalkamera integriert.

Als Marker können grundsätzlich bekannte Marker oder Codeträger eingesetzt werden. Wichtig hierbei ist nur, dass die verwendeten Marker die gewünschte Information optisch so darstellen, dass diese Marker von einer Digitalkamera erfasst und die fragliche Information durch Bildverarbeitung extrahiert werden kann. Besonders bevorzugt werden als Marker Barcodes, insbesondere zweidimensionale Barcodes, verwendet.

Damit eine festgestellte Relativposition bezüglich eines bestimmten Markers grundsätzlich eindeutig einer bestimmten Absolutposition des Fahrzeugs zugeordnet werden kann, ist es weiterhin bevorzugt, wenn die verwendeten Marker unterschiedlich sind, also mittels Bildverarbeitung eindeutig unterschieden werden können.

Für die Erkennung und Auswertung der Barcodes mit Hilfe von bildverarbeitenden Verfahren ist es zweckmäßig, wenn der Abstand zwischen einzelnen zweidimensionalen Barcodes mindestens so groß ist wie die kleinste in den Barcodes auftretende Struktur, also mindestens so groß wie eine minimale Informationseinheit, insbesondere mindestens so groß wie ein Bit, des zweidimensionalen Barcodes.

Bei einer einfachen, gleichwohl aber effektiven Variante des erfindungsgemäßen Verfahrens, werden die Marker nur im Hinblick auf ihre Präsenz ausgewertet, d.h. die in den Markern vorhandene Information wird nicht näher betrachtet. Es wird dann einfach die kumulierte Zahl der erkannten Marker gespeichert und jeweils mit einem Referenzwert verglichen. Ein Wartungsparameter des Fahrzeugs kann dann beispielsweise angezeigt werden, wenn eine gewisse kritische Zahl von Markern erkannt wurde. Diese Anzahl der Marker ist bei im Wesentlichen konstantem Abstand der Marker oder Barcodes untereinander proportional zur zurückgelegten Wegstrecke.

Eine Weiterentwicklung dieses Verfahrens besteht darin, dass aus den Positionsdaten eine zurückgelegte Laufstrecke des Fahrzeugs bestimmt wird, welche in die Bestimmung mindestens eines der Wartungsparameter einfließt. Da der Verschleiß von wichtigen Komponenten der hier betrachteten Fahrzeuge, beispielsweise der Verschleiß der Laufrollen, unmittelbar mit einer zurückgelegten Laufstrecke korreliert, kann auch die Laufstrecke selbst als Wartungsparameter herangezogen werden.

Grundsätzlich kann bereits ein einziger Wartungsparameter ausreichend sein und bei einfachen Varianten des erfindungsgemäßen Verfahrens und der erfindungsgemäßen Vorrichtung wird dies beispielsweise eine insgesamt zurückgelegte Laufstrecke sein. Da die verschiedenen Komponenten eines Fahrzeugs unterschiedlich auf verschiedene äußere Bedingungen, wie beispielsweise Temperatur, Druck, Partialdruck von Prozess-oder sonstigen Gasen und/oder Erschütterungen reagieren, kann es auch zweckmäßig sein, eine Mehrzahl von Wartungsparametern zu ermitteln und gegebenenfalls eine Wartungsreife anzuzeigen, wenn mindestens einer dieser Wartungsparameter eine bestimmte festzulegende Wartungsbedingung erfüllt.

Grundsätzlich kann es ausreichend sein, aus den festgestellten Markerbildern im Erfassungsbereich der Digitalkamera jeweils die Relativposition des Fahrzeugs bezüglich des jeweiligen Markers zu bestimmen. Bei einer weiteren Variante des erfindungsgemäßen Verfahrens kann zusätzlich aus der Relativposition bezüglich eines bestimmten Markers und einer bekannten Absolutposition dieses Markers eine Absolutposition des Fahrzeugs, beispielsweise bezogen auf einen bestimmten Punkt in einer Fertigungshalle, bestimmt werden. Die Absolutposition kann dann direkt ausgegeben und beispielsweise von einer speicherprogrammierbaren Steuerung an andere Komponenten weitergegeben werden.

Die Datengrundlage zur Bestimmung der Wartungsreife wird weiter verbreitert, wenn mit den Positionsdaten jeweils die Zeit mitgeschrieben wird. Beispielsweise kann dann eine Wartungsreife auch angezeigt werden, wenn die Anzahl von durchlaufenen Positionen in einer gewissen Zeitspanne einen festzulegenden Wert überschreitet. Dies ist gleichbedeutend damit, dass die mittlere Geschwindigkeit über diese Zeitspanne größer ist als ein bestimmter Grenzwert.

Die Bewegung des Fahrzeugs kann im Hinblick auf die Wartungsreife noch genauer berücksichtigt werden, wenn aus den Positionsdaten und der Zeit eine Geschwindigkeit und/oder eine Beschleunigung des Fahrzeugs berechnet wird und weiterhin die Geschwindigkeit und/oder die Beschleunigung in die Bestimmung mindestens eines der Wartungsparameter einfließt.

Da manche Verschleißerscheinungen mindestens indirekt mit einer Bewegungsenergie des Fahrzeugs korrelieren, kann es außerdem zweckmäßig sein, wenn in die Bestimmung mindestens eines der Wartungsparameter ein über das Quadrat der Geschwindigkeit gebildetes Zeitintegral einfließt.

Die Wartungsreife kann für ein bestimmtes Fahrzeug noch spezifischer ermittelt und angezeigt werden, wenn außerdem Messsignale von weiteren Sensoren, insbesondere Temperatur-, Luftfeuchte-, Luftdruck-, Gassensoren und/oder Beschleunigungssensoren, in die Bestimmung mindestens eines der Wartungsparameter einfließen. Beispielsweise können die Messsignale dieser weiteren Sensoren oder deren Beträge über die Zeit und/oder auch über die Laufstrecke integriert werden und das so gebildete Integral kann selbst einen Wartungsparameter bilden oder jedenfalls in die Bestimmung eines der Wartungsparameter mit einfließen.

Typische Verschleißteile sind beispielsweise die Lager und Rollen der verwendeten Fahrzeuge. Auch die Bürsten und Kohlen der eingesetzten Elektromotoren unterliegen einem Verschleiß, der von den oben genannten Parametern abhängen kann.

Bei besonders bevorzugten Ausführungsbeispielen weist die erfindungsgemäße Vorrichtung demgemäß zusätzlich mindestens einen Temperaturfühler auf, der mit der Recheneinrichtung verbunden ist und dessen Messwerte in die Bestimmung mindestens eines der Wartungsparameter miteinfließt. Alternativ oder zusätzlich können außerdem weitere Sensoren, insbesondere Drucksensoren, Luftfeuchtesensoren, Beschleunigungssensoren und/oder Gassensoren, vorhanden sein, deren Messwerte wiederum in die Bestimmung mindestens eines der Wartungsparameter miteinfließen.

Mit Hilfe eines ein- oder mehrachsigen Beschleunigungssensors kann beispielsweise mitprotokolliert werden, ob und inwieweit das Fahrzeug eventuell übermäßigen Erschütterungen ausgesetzt ist. Diese Information kann außerdem einen Hinweis auf die Qualität der Fahrbahn oder des Fahrwegs, beispielsweise von Schienen, liefern.

Wenn etwa die Laufrollen abgenutzt sind und sich deshalb der Rollwiderstand erhöht, kann das Fahrzeug nicht mehr so schnell beschleunigen. Demgemäß kann eine Wartungsreife des Fahrzeugs auch angezeigt werden, wenn eine ermittelte Beschleunigung länger als ein vorbestimmter Wert in einem ebenfalls vorbestimmtem Bereich liegt.

Die Schritte des erfindungsgemäßen Verfahrens werden bevorzugt auf der Recheneinrichtung als Computerprogramm ausgeführt.

In grundsätzlich bekannter Weise kann dieses Computerprogramm auf einem computerlesbaren Datenträger, insbesondere in einem ROM eines Mikrocontrollers oder eines programmierbaren Logikbausteins gespeichert sein.

Weitere Vorteile und Merkmale der Erfindung werden nachstehend mit Bezug auf die beigefügten schematischen Figuren beschrieben. Hierin zeigt:
- Fig. 1:: eine schematische Ansicht einer erfindungsgemäßen Vorrichtung an einer Laufkatze an einem Kranbalken;
- Figuren 2 bis 4:: schematische Diagramme mit einer zurückgelegten Wegstrecke, im Verlauf einer Geschwindigkeit und dem zugehörigen Verlauf einer Beschleunigung.

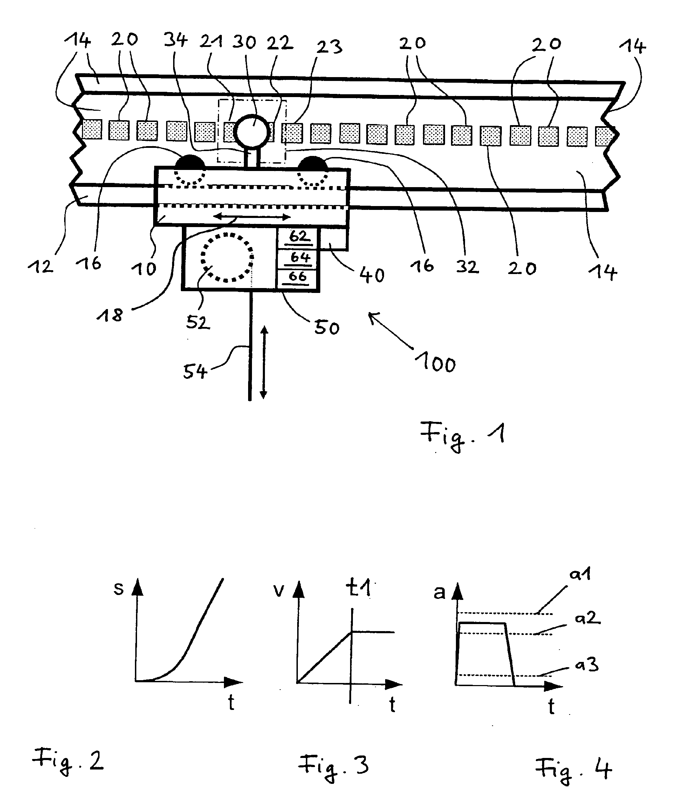

Ein Anwendungsbeispiel für das erfindungsgemäße Verfahren und eine erfindungsgemäße Vorrichtung 100 wird mit Bezug auf Figur 1 erläutert. Gezeigt ist dort ein Fahrzeug 10, welches auf einem Träger 14 mit Hilfe von Rollen 16 oder Laufrollen und einem hier nicht gezeigten Antrieb verfahrbar ist. Fahrzeuge der in Figur 1 gezeigten Art werden auch als Laufkatzen bezeichnet. Der Träger 14 bildet eine Bahn 12, entlang welcher das Fahrzeug 10 beweglich ist. Die Bewegungsrichtung oder Hauptbewegungsrichtung des Fahrzeugs 10 ist in Figur 1 die x-Richtung und durch einen Doppelpfeil 18 angedeutet. In einem Unterbau 50 des Fahrzeugs 10 ist eine hier schematisch dargestellte Seilwinde 52 positioniert, mit welcher über ein Seil 54 Lasten geladen und transportiert werden können.

Die erfindungsgemäße Vorrichtung 100 weist als wesentliche Bestandteile eine Digitalkamera 30 und eine Recheneinrichtung 40 auf, mit welcher die Digitalkamera 30 wirkungsmäßig, typischerweise durch ein Verbindungskabel, verbunden ist.

Die Digitalkamera 30 ist über einen Haltearm 34 starr mit dem Fahrzeug 10 verbunden. Ein im Wesentlichen quadratischer Erfassungsbereich 32 der Digitalkamera 30 ist ebenfalls schematisch dargestellt.

Die Raumrichtungen sind in Figur 1 durch ein Koordinatensystem 90 angedeutet.

In der erfindungsgemäß vorhandenen Recheneinrichtung 40 wird das erfindungsgemäße Computerprogramm abgearbeitet. Ein Computerprogrammprodukt im Sinn der Erfindung kann insbesondere die Recheneinrichtung 40 selbst mit zugehörigem ROM-Speicher sein.

Wesentlicher Bestandteil des hier beschriebenen erfindungsgemäßen optischen Positionierungssystems sind außerdem eine Vielzahl von insbesondere jeweils unterschiedlichen Markern 20, wobei es sich im gezeigten Beispiel um zweidimensionale Barcodes handelt. Diese Marker 20 sind entlang des Trägers äquidistant angebracht. Typischerweise handelt es sich hierbei um aufgeklebte Bänder. In der gezeigten Situation werden von der Digitalkamera 30 die Marker 21 und 22 vollständig erfasst. Außerdem wird ein Randbereich des Markers 23 erfasst.

Weiterhin sind an der Unterseite des Fahrzeugs 10 eine Recheneinrichtung 40, die mit der Digitalkamera 30 verbunden ist, sowie ein Temperaturfühler 62, ein Luftfeuchtesensor 64 und ein Beschleunigungssensor 66 angeordnet, die ebenfalls mit der Recheneinrichtung 40 verbunden sind.

Aus der Position der Bilder der Marker 20 im Erfassungsbereich 32 der Digitalkamera 30 kann durch Bildverarbeitung erfindungsgemäß unmittelbar geschlossen werden auf die Relativposition des Fahrzeugs 10 bezüglich dem jeweiligen Marker. Voraussetzung hierfür ist, dass die Position der Kamera 30 bezüglich des Fahrzeugs 10 vorher als Konstante ermittelt wurde.

Ein wesentlicher Kerngedanke der hier beschriebenen Erfindung besteht darin, die mit Hilfe von Bildverarbeitung gewonnenen Positionsdaten zum Bestimmen mindestens eines Wartungsparameters heranzuziehen. Beispielsweise kann ein Streckenzähler realisiert werden, der die zurückgelegte Strecke des Sensors und damit des Fahrzeugs aufgrund der jeweils ermittelten Position aufintegriert. Die zurückgelegte Strecke kann dann direkt von der Rechen- oder EDV-Einrichtung abgefragt werden, und/oder im Sensor mit einem zuvor eingestellten Wert verglichen werden.

Wenn der aktuelle Wert größer ist als ein eingestellter Wert, also ein Referenzwert, kann der Sensor, also die erfindungsgemäße Vorrichtung 100, mittels eines Flags die Recheneinrichtung oder auch eine übergeordnete Steuereinrichtung hiervon in Kenntnis setzen. Beispielsweise kann der Wert für die zurückgelegte Strecke über die RechenEinrichtung 40 wieder zurückgesetzt werden.

Wie im Folgenden im Zusammenhang mit den Figuren 2 bis 4 beschrieben, ist es auf Grundlage der eingelesenen Positionsdaten auch möglich, Beschleunigungen zu berechnen.

Äquivalente Komponenten sind in allen Figuren mit denselben Bezugszeichen versehen.

In Fig. 2 ist das Weg-Zeit-Diagramm s - t eines anfahrenden Fahrzeugs dargestellt. Fig. 3 zeigt den zugehörigen Geschwindigkeitsverlauf, aus dem ersichtlich ist, dass in einer Anfangsphase die Geschwindigkeit v linear ansteigt und sodann ab einem bestimmten Zeitpunkt t1 konstant bleibt. Der zugehörige Verlauf der Beschleunigung a ist in Fig. 4 dargestellt. Die Beschleunigung steigt dabei rasch auf einen Wert zwischen zwei erlaubten Beschleunigungen a1 und a2 an und sinkt nach Ende der Beschleunigungsphase ebenso rasch auf einen Wert unterhalb eines dritten Beschleunigungswerts a3 ab.

Ein bestimmtes System kann nun über die Werte der Beschleunigungen a1 und a2, zwischen denen erlaubte Werte für die Beschleunigungen liegen, charakterisiert werden. Unterhalb des Werts a3 wird von Stillstand ausgegangen.

Eine Möglichkeit, einen Wartungsparameter zu definieren, resultiert beispielsweise aus der Überlegung, dass beim Start und beim Ende einer Beschleunigungs- oder einer Verzögerungsphase der Wert der Beschleunigung nur eine gewisse Zeit außerhalb des gültigen Bereichs liegen darf. In allen anderen Fällen gilt eine Beschleunigung oder eine Verzögerung als außerhalb des zulässigen Toleranzbereichs liegend und das System muss gewartet werden. In diesen Fällen kann dann die Recheneinrichtung ein entsprechendes Signal an eine Steuerung geben.

Mit der vorliegenden Erfindung werden ein neues Verfahren und eine neue Vorrichtung zum Bestimmen eines Wartungsintervalls eines Fahrzeugs angegeben. Mit Hilfe von im Wesentlichen zur Positionsbestimmung des Fahrzeugs vorhandenen Komponenten und gegebenenfalls mit weiteren Sensoren können sehr zuverlässig und für jedes Fahrzeug individuell die Wartungsintervalle bestimmt werden. Ein wesentlicher Vorteil der Erfindung kann darin gesehen werden, dass ein separater Wartungs- oder Prüfplatz nicht mehr notwendig ist und dass außerdem die Zahl der Ausfälle deutlich reduziert werden kann.

## Patentansprüche

1. Verfahren zum Bestimmen eines Wartungsintervalls eines Fahrzeugs, welches entlang einer Bahn (12) bewegt wird,
wobei Positionsdaten des Fahrzeugs (10) aufgenommen und gespeichert werden,
wobei mindestens ein Wartungsparameter bestimmt wird,
wobei der Wartungsparameter mit einem vorgegebenen Referenzwert verglichen wird und
wobei zum Anzeigen der Wartungsreife des Fahrzeugs (10) ein Signal ausgegeben wird, wenn der Wartungsparameter in einer bestimmten Relation zu dem Referenzwert steht, insbesondere größer als der Referenzwert ist,
**dadurch gekennzeichnet,**
**dass** das Fahrzeug (10) eine Einschienen-Hängebahn, ein Regalbediengerät, eine Krananlage oder eine Laufkatze ist,
**dass** entlang der Bahn (12) Marker (20), insbesondere Codeträger oder Barcodes, angeordnet sind,
**dass** die Marker (20) mit einer an dem Fahrzeug (10) angeordneten Digitalkamera (30) erfasst werden,
**dass** mittels Bildverarbeitung aus einer Lage mindestens eines Markerbilds im Erfassungsbereich (32) der Digitalkamera (30) eine Relativposition des Fahrzeugs (10) bezüglich des jeweiligen Markers (21, 22, 23) oder der jeweiligen Marker bestimmt wird und
**dass** der Wartungsparameter auf Grundlage der Positionsdaten bestimmt wird.

2. Verfahren nach Anspruch 1,
**dadurch gekennzeichnet,**
**dass** aus den Positionsdaten eine zurückgelegte Laufstrecke (s) des Fahrzeugs (10) bestimmt wird, welche in die Bestimmung mindestens eines der Wartungsparameter einfließt.

3. Verfahren nach einem der Ansprüche 1 oder 2,
**dadurch gekennzeichnet,**
**dass** aus der Relativposition bezüglich eines bestimmten Markers (21, 22, 23) und einer bekannten Absolutposition dieses Markers (21, 22, 23) eine Absolutposition des Fahrzeugs (10) bestimmt wird.

4. Verfahren nach einem der Ansprüche 1 bis 3,
**dadurch gekennzeichnet,**
**dass** mit den Positionsdaten jeweils die Zeit mitgeschrieben wird.

5. Verfahren nach einem der Ansprüche 1 bis 4,
**dadurch gekennzeichnet,**
**dass** aus den Positionsdaten und der Zeit eine Geschwindigkeit (v) und/oder eine Beschleunigung (a) des Fahrzeugs (10) berechnet wird, und
**dass** die Geschwindigkeit (v) und/oder die Beschleunigung (a) in die Bestimmung mindestens eines der Wartungsparameter einfließt.

6. Verfahren nach einem der Ansprüche 1 bis 5,
**dadurch gekennzeichnet,**
**dass** in die Bestimmung mindestens eines der Wartungsparameter ein über das Quadrat der Geschwindigkeit (v) gebildetes Zeitintegral einfließt.

7. Verfahren nach einem der Ansprüche 1 bis 6,
**dadurch gekennzeichnet,**
**dass** Messsignale von weiteren Sensoren, insbesondere Temperatur-, Luftfeuchte-, Luftdruck-, Gassensoren und/oder Beschleunigungssensoren, in die Bestimmung mindestens eines der Wartungsparameter einfließen.

8. Verfahren nach Anspruch 7,
**dadurch gekennzeichnet,**
**dass** die Messsignale der weiteren Sensoren (62, 64, 66) über die Zeit und/oder die Laufstrecke integriert werden und
**dass** das so gebildete Integral in die Bestimmung mindestens eines der Wartungsparameter einfließt.

9. Verfahren nach Anspruch 7 oder 8,
**dadurch gekennzeichnet,**
**dass** eine Wartungsreife des Fahrzeugs (10) angezeigt wird, wenn eine ermittelte Beschleunigung (a) länger als ein vorbestimmter Wert in einem ebenfalls vorbestimmten Bereich liegt.

10. Vorrichtung zum Bestimmen eines Wartungsintervalls eines Fahrzeugs, welches entlang einer Bahn (12) beweglich ist, insbesondere zur Durchführung des Verfahrens nach einem der Ansprüche 1 bis 9,
mit einer Recheneinrichtung (40), welche eingerichtet ist zum:
- Aufnehmen und Speichern von Positionsdaten des Fahrzeugs (10),
- Bestimmen mindestens eines Wartungsparameters,
- Vergleichen des Wartungsparameters mit einem vorgegebenen Referenzwert,
- Ausgeben eines Signals zur Anzeige einer Wartungsreife des Fahrzeugs (10), wenn der Wartungsparameter in einer bestimmten Relation zu dem Referenzwert steht, insbesondere größer ist als der Referenzwert,
**dadurch gekennzeichnet,**
**dass** das Fahrzeug (10) eine Einschienen-Hängebahn, ein Regalbediengerät, eine Krananlage oder eine Laufkatze ist,
**dass** eine an dem Fahrzeug (10) anzuordnende Digitalkamera (30) zum Erfassen von entlang der Bahn (12) angeordneten Markern (20) vorhanden ist und
**dass** die Recheneinrichtung (40) mit der Digitalkamera (30) verbunden ist und außerdem eingerichtet ist zum:
- Bestimmen einer Relativposition des Fahrzeugs (10) bezüglich eines Markers (21, 22, 23) mittels Bildverarbeitung aus einer Lage des Bilds des jeweiligen Markers (21, 22, 23) im Erfassungsbereich (32) der Digitalkamera (30),
- Bestimmen des Wartungsparameters auf Grundlage der Positionsdaten.

11. Vorrichtung nach Anspruch 10,
**dadurch gekennzeichnet,**
**dass** zusätzlich mindestens ein Temperaturfühler (62) mit der Recheneinrichtung (40) verbunden ist, dessen Messwerte in die Bestimmung mindestens eines der Wartungsparameter einfließen.

12. Vorrichtung nach Anspruch 10 oder 11,
**dadurch gekennzeichnet,**
**dass** weitere Sensoren, insbesondere ein Drucksensor, ein Luftfeuchtesensor (64), ein Beschleunigungssensor (66) und/oder Gassensoren, vorhanden sind, deren Messwerte in die Bestimmung mindestens eines der Wartungsparameters einfließen.

13. Vorrichtung nach einem der Ansprüche 10 bis 12,
**dadurch gekennzeichnet,**
**dass** die Recheneinrichtung (40) ein Mikrocontroller oder ein programmierbarer Logikbaustein ist.

14. Computerprogramm mit Programmcodemitteln, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.

15. Computerprogrammprodukt mit Programmcodemitteln, die auf einem computerlesbaren Datenträger gespeichert sind, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.

## Claims

1. Method for determining a maintenance interval of a vehicle which is moved along a lane (12),
wherein position data of the vehicle (10) are recorded and stored,
wherein at least one maintenance parameter is determined,
wherein the maintenance parameter is compared with a predefined reference value, and
wherein a signal is output to indicate that maintenance of the vehicle (10) is due if the maintenance parameter is in a certain relation with respect to the reference value, in particular if it is greater than the reference value,
**characterised in that**
the vehicle (10) is an overhead monorail, a storage and retrieval system, a crane installation or trolley,
markers (20), in particular code carriers or barcodes, are arranged along the lane (12),
the markers (20) are detected with a digital camera (30) arranged on the vehicle (10),
by means of image processing a relative position of the vehicle (10) in relation to the respective marker (21, 22, 23) or the respective markers is determined from a position of at least one marker image in the detection range (32) of the digital camera (30) and
the maintenance parameter is determined based on the position data.

2. Method according to claim 1,
**characterised in that**
a distance (s) covered by the vehicle (10) is determined from the position data which is incorporated into the determination of at least one of the maintenance parameters.

3. Method according to one of claims 1 or 2,
**characterised in that**
an absolute position of the vehicle (10) is determined from the relative position with respect to a certain marker (21, 22, 23) and a known absolute position of this marker (21, 22, 23).

4. Method according to one of claims 1 to 3,
**characterised in that**
the time is recorded in each case along with the position data.

5. Method according to one of claims 1 to 4,
**characterised in that**
a speed (v) and / or an acceleration (a) of the vehicle (10) is / are calculated from the position data and the time, and
the speed (v) and / or the acceleration (a) is / are incorporated into the determination of at least one of the maintenance parameters.

6. Method according to one of claims 1 to 5,
**characterised in that**
a time integral formed via the square of the speed (v) is incorporated into the determination of at least one of the maintenance parameters.

7. Method according to one of claims 1 to 6,
**characterised in that**
measurement signals from further sensors, in particular temperature, air humidity, air pressure, gas sensors and / or acceleration sensors, are incorporated into the determination of at least one of the maintenance parameters.

8. Method according to claim 7,
**characterised in that**
the measurement signals of the further sensors (62, 64, 66) are integrated over time and / or the distance covered and
the integral thus formed is incorporated into the determination of at least one of the maintenance parameters.

9. Method according to claim 7 or 8,
**characterised in that**
it is indicated that the vehicle (10) is due for maintenance if a detected acceleration (a) is longer than a predetermined value in a likewise predetermined range.

10. Device for determining a maintenance interval of a vehicle which can be moved along a lane (12), in particular for carrying out the method according to one of claims 1 to 9,
with a computing means (40) which is adapted to:
- record and store position data of the vehicle (10),
- determine at least one maintenance parameter,
- compare the maintenance parameter with a predefined reference value,
- output a signal to indicate that the vehicle (10) is due for maintenance if the maintenance parameter is in a certain relation with respect to the reference value, in particular if it is greater than the reference value,
**characterised in that**
the vehicle (10) is an overhead monorail, a storage and retrieval system, a crane installation or a trolley,
a digital camera (30) to be arranged on the vehicle (10) is provided to detect markers (20) arranged along the lane (12), and
the computing means (40) are connected to the digital camera (30) and are further adapted to:
- determine a relative position of the vehicle (10) with respect to a marker (21, 22, 23) by means of image processing from a position of the image of the respective marker (21, 22, 23) in the detection range (32) of the digital camera (30),
- determine the maintenance parameter based on the position data.

11. Device according to claim 10,
**characterised in that**
additionally at least one temperature sensor (62) is connected to the computing means (40), of which the measurement values are incorporated into the determination of at least one of the maintenance parameters.

12. Device according to claim 10 or 11,
**characterised in that**
further sensors, in particular a pressure sensor, an air humidity sensor (64), an acceleration sensor (66) and / or gas sensors, are provided, of which the measurement values are incorporated into the determination of at least one of the maintenance parameters.

13. Device according to one of claims 10 to 12,
**characterised in that**
the computing means (40) is a microcontroller or a programmable logic component.

14. Computer program with program code means to carry out the computing and evaluation steps of a method according to one of claims 1 to 9 if the computer program is run on a computer, in particular the computing means (40) according to claim 10, effectively connected to the digital camera (30).

15. Computer program product with program code means which are stored on a computer-readable data carrier in order to carry out the computing and evaluation steps of a method according to one of claims 1 to 9 if the computer program is run on a computer, in particular the computing means (40) according to claim 10, effectively connected to the digital camera (30).

## Revendications

1. Procédé servant à déterminer un intervalle de maintenance d'un véhicule, qui se déplace le long d'un rail (12),
dans lequel les données de position du véhicule (10) sont relevées et enregistrées,
dans lequel au moins un paramètre de maintenance est déterminé,
dans lequel le paramètre de maintenance est comparé à une valeur de référence préalablement définie, et
dans lequel un signal est émis afin d'afficher le moment à partir duquel le véhicule (10) doit faire l'objet d'une maintenance lorsque le paramètre de maintenance se trouve dans une relation déterminée par rapport à la valeur de référence, en particulier lorsqu'il est plus grand que la valeur de référence,
**caractérisé en ce**
**que** le véhicule (10) est une ligne aérienne monorail, un appareil de manutention de rayonnage, une installation de grue ou un chariot roulant,
**que** des marqueurs (20), en particulier des supports de code ou des codes à barres, sont disposés le long du rail (12),
**que** les marqueurs (20) sont détectés à l'aide d'une caméra numérique (30) disposée au niveau du véhicule (10),
**qu'**une position relative du véhicule (10) par rapport au marqueur (21, 22, 23) respectif ou aux marqueurs respectifs est déterminée au moyen d'un traitement d'image à partir d'une position d'au moins une image de marqueur dans la zone de détection (32) de la caméra numérique (30), et
**que** le paramètre de maintenance est déterminé sur la base des données de position.

2. Procédé selon la revendication 1,
**caractérisé en ce**
**qu'**un trajet parcouru (s) du véhicule (10) est déterminé à partir des données de position, lequel est pris en compte dans la détermination au moins d'un des paramètres de maintenance.

3. Procédé selon l'une quelconque des revendications 1 ou 2,
**caractérisé en ce**
**qu'**une position absolue du véhicule (10) est déterminée à partir de la position relative par rapport à un marqueur (21, 22, 23) déterminé et à partir d'une position , absolue connue dudit marqueur (21, 22, 23).

4. Procédé selon l'une quelconque des revendications 1 à 3,
**caractérisé en ce**
**que** respectivement le temps est consigné conjointement avec les données de position.

5. Procédé selon l'une quelconque des revendications 1 à 4,
**caractérisé en ce**
**qu'**une vitesse (v) et/ou une accélération (a) du véhicule (10) est calculée à partir des données de position et du temps, et
**que** la vitesse (v) et/ou l'accélération (a) sont prises en compte dans la détermination au moins d'un des paramètres de maintenance.

6. Procédé selon l'une quelconque des revendications 1 à 5,
**caractérisé en ce**
**qu'**une intégrale de temps formée par le carré de la vitesse (v) est prise en compte dans la détermination au moins d'un des paramètres de maintenance.

7. Procédé selon l'une quelconque des revendications 1 à 6,
**caractérisé en ce**
**que** des signaux de mesure d'autres capteurs, en particulier de capteurs de température, d'humidité de l'air, de pression de l'air, de gaz et/ou des capteurs d'accélération, sont pris en compte dans la détermination au moins d'un des paramètres de maintenance.

8. Procédé selon la revendication 7,
**caractérisé en ce**
**que** les signaux de mesure des autres capteurs (62, 64, 66) relatifs aux temps et/ou au trajet sont intégrés, et
**que** l'intégrale ainsi obtenue est prise en compte dans la détermination au moins d'un des paramètres de maintenance.

9. Procédé selon la revendication 7 ou 8,
**caractérisé en ce**
**que** le moment à partir duquel le véhicule (10) peut faire l'objet d'une maintenance est affiché lorsqu'une accélération (a) déterminée est plus longue qu'une valeur préalablement déterminée dans une plage de la même manière préalablement déterminée.

10. Dispositif servant à déterminer un intervalle de maintenance d'un véhicule, lequel se déplace le long d'un rail (12), en particulier servant à mettre en oeuvre le procédé selon l'une quelconque des revendications 1 à 9,
comprenant un système de calcul (40) qui est mis au point pour :
- relever et enregistrer des données de position du véhicule (10),
- déterminer au moins un paramètre de maintenance,
- comparer le paramètre de maintenance à une valeur de référence préalablement définie,
- émettre un signal servant à afficher le moment à partir duquel le véhicule (10) peut faire l'objet d'une maintenance, lorsque le paramètre de maintenance se trouve dans une relation déterminée par rapport à la valeur de référence, en particulier lorsqu'il est plus grand que la valeur de référence,
**caractérisé en ce**
**que** le véhicule (10) est une ligne aérienne monorail, un appareil de manutention de rayonnage, une installation de grue ou un chariot roulant,
**qu'**une caméra numérique (30) à disposer au niveau du véhicule (10) servant à détecter des marqueurs (20) disposés le long du rail (12) est disponible, et
**que** le système de calcul (40) est relié à la caméra numérique (30) et est mis au point par ailleurs afin de :
- déterminer une position relative du véhicule (10) par rapport à un marqueur (21, 22, 23) au moyen d'un traitement d'image à partir d'une position de l'image du marqueur (21, 22, 23) respectif dans la zone de détection (32) de la caméra numérique (30),
- déterminer le paramètre de maintenance sur la base des données de position.

11. Dispositif selon la revendication 10,
**caractérisé en ce**
**qu'**en supplément au moins une sonde de température (62) est reliée au système de calcul (40), dont les valeurs de mesure sont prises en compte dans la détermination au moins d'un des paramètres de maintenance.

12. Dispositif selon la revendication 10 ou 11,
**caractérisé en ce**
**que** d'autres capteurs, en particulier un capteur de pression, un capteur d'humidité de l'air (64), un capteur d'accélération (66) et/ou des capteurs de gaz, sont disponibles,
les valeurs de mesure desquels sont prises en compte dans la détermination au moins d'un des paramètres de maintenance.

13. Dispositif selon l'une quelconque des revendications 10 à 12,
**caractérisé en ce**
**que** le système de calcul (40) est un microcontrôleur ou un module logique programmable.

14. Programme informatique comprenant des moyens de code de programme, afin de mettre en oeuvre les étapes de calcul et d'analyse d'un procédé selon l'une quelconque des revendications 1 à 9, lorsque le programme informatique est exécuté sur un ordinateur relié selon l'action à la caméra numérique (30), en particulier au système de calcul (40) selon la revendication 10.

15. Produit de programme informatique comprenant des moyens de code de programme, qui sont enregistrés sur un support de données lisibles sur ordinateur afin de mettre en oeuvre les étapes de calcul et d'analyse d'un procédé selon l'une quelconque des revendications 1 à 9, lorsque le programme informatique est exécuté sur un ordinateur relié selon l'action à la caméra numérique (30), en particulier le système de calcul (40) selon la revendication 10.
